(19) Europäisches Patentamt / European Patent Office / Office européen des brevets

(11) **EP 1 770 292 A1**

(12) **EUROPEAN PATENT APPLICATION**
published in accordance with Art. 158(3) EPC

(43) Date of publication:
**04.04.2007 Bulletin 2007/14**

(51) Int Cl.:
*F16C 33/34* *(2006.01)*     *F16C 33/66* *(2006.01)*

(21) Application number: **05743781.6**

(86) International application number:
**PCT/JP2005/009449**

(22) Date of filing: **24.05.2005**

(87) International publication number:
**WO 2006/001149 (05.01.2006 Gazette 2006/01)**

(84) Designated Contracting States:
**DE FR IT**

(30) Priority: **25.06.2004 JP 2004188690**
**05.07.2004 JP 2004198617**

(71) Applicant: **NTN CORPORATION**
**Osaka-shi, Osaka 550-0003 (JP)**

(72) Inventors:
 • **TSUJIMOTO, Takashi;**
  **Iwata-shi Shizuoka;4380037 (JP)**
 • **FUKAMI, Rino;**
  **Iwata-shi Shizuoka;4380037 (JP)**

(74) Representative: **Mischung, Ralf**
 **Patentanwälte Eder & Schieschke**
 **Elisabethstrasse 34**
 **80796 München (DE)**

(54) **ROLLING BEARING**

(57)    At least on a surface of a rolling element of a rolling bearing, innumerable minute concave recesses are randomly formed. An average area of the recesses is in a range of 30 to 100 $\mu m^2$, and Rymax is in a range of 0.4 to 1.0.

FIG. 1

EP 1 770 292 A1

**Description**

TECHNICAL FIELD

The present invention relates to a rolling bearing, which can be applied to, for example, a roller bearing used for a shaft supporting portion as a transmission of an automobile.

BACKGROUND ART

JP-A-02-168021 and JP-A-06-42536 each disclose a rolling bearing in which a surface of a rolling element is provided with minute irregularities formed thereon to improve an oil film forming ability. In this conventional technique, as a countermeasure for a damage due to poor lubrication, such as a peeling damage of a roller bearing, there are provided recesses each having a minute concave shape in rolling contact surfaces of rollers and/or raceway surfaces of inner and outer races. When a surface roughness is expressed by a parameter Rqni, a value of a ratio Rqni (L) /Rqni (C) between an axial surface roughness Rqni(L) and a circumferential surface roughness Rqni(C) becomes 1.0 or less, and a parameter Sk value of the surface roughness is set to be -1.6 or less, thereby elongating a life of the rolling bearing if a mating surface is either a rough surface or a smooth-finished surface.

DISCLOSURE OF THE INVENTION

In recent years, there are tendencies of downsizing and increasing power output of a portion in which the rolling bearing is used such as a transmission of an automobile, and a viscosity of a lubricating oil tends to be lower. In other words, in a use environment of the rolling bearing, load and temperature are increasing. Thus, a lubrication environment has been changing to be severer for bearings than ever before. Separations of a surface originating type due to lubrication failure, reduction in fatigue life due to higher contact pressure, and separations under foreign matter contaminated environment tend to occur easily. In this case, it is required to enable enhancement of the life under any lubrication conditions such as low viscosity severe lubrication, the foreign matter contaminated environment, or detergent oil lubrication.

Conventional minute concave recesses are formed so that when a surface roughness is expressed by the parameter Rqni, a value of a ratio Rqni(L)/Rqni(C) of an axial surface roughness Rqni(L) and a circumferential surface roughness Rqni (C) is equal to or lower than 1.0 (Rqni $\geq$ 0.10), and a surface roughness parameter Sk value is equal to or lower than -1.6, thereby realizing elongated life even if a mating surface is either a rough surface or a smooth-finished surface. However, effects thereof may not be exerted when an oil film is extremely thin under conditions of low viscosity and lean lubrication.

The rolling bearing according to an embodiment of the present invention includes at least on a surface of a rolling element innumerable minute concave recesses randomly formed. An average area of the recesses is in a range of 30 to 100 $\mu$m$^2$, and Rymax is in a range of 0.4 to 1.0. At least on the surface of the rolling element, the innumerable minute concave recesses are randomly formed, thereby enhancing an oil film forming ability and realizing elongation in life even under conditions in which the oil film is extremely thin under the low viscosity and the lean lubrication. In particular, by setting the average area of the recesses in a range of 30 to 100 $\mu$m$^2$ and Rymax in a range of 0.4 to 1.0, it is possible to prevent an oil film shortage even under the lean lubrication. As compared to the conventional product, it is possible to obtain the longer life even under the conditions in which the oil film is extremely thin.

At least one of an outer member, an inner member, and the rolling element constituting the rolling bearing has a nitrogen-enriched layer. An austenite grain size in the nitrogen-enriched layer may be in a range larger than a grain size No. 10. After forming the nitrogen-enriched layer, by setting the austenite grain size smaller so that the grain size number becomes larger than No. 11, the rolling fatigue life is significantly improved, thereby making it possible to obtain an excellent crack resistance and resistance to dimensional change by aging.

As is commonly known, the rolling bearing is a machine element in which a rotating or rocking shaft is supported by a rolling motion of rolling elements (balls or rollers). Usually, the rolling elements are rotatably interposed between a raceway of an inner race and a raceway of an outer race. However, there are a type having no inner race in which an outer peripheral surface of a shaft directly serves as a raceway surface, and a type having no outer race in which an inner peripheral surface of a gear directly serves as a raceway surface. When terms such as "innermember" and "outermember" are used, there is an intention of preventing exclusion of not only the inner race and the outer race but also shafts, gears, or the like each having a raceway surface. Further when an expression "at least on a surface of a rolling element" is used, there is an intention of preventing exclusion of a rolling bearing in which the minute concave recesses are also formed in a raceway surface, and in a case where the rolling element is a roller, there is an intention of preventing exclusion of a rolling bearing in which the minute concave recesses are formed not only in the raceway surface but also in an end surface.

When the surface roughness of the surface having the recesses formed thereon is indicated by a parameter Rqni, a value of a ratio "Rqni(L)/Rqni(C)" between an axial surface roughness Rqni (L) and a circumferential surface roughness Rqni (C) may be equal to or lower than 1.0. The parameter Rqni is obtained by integrating a square of a height deviation from a roughness central line to a roughness curve within an interval of a measurement length, and by determining a square root of a mean value within the interval, and is also referred to as a root-mean-square roughness (ISO 4287: 1997). Rqni is determined from a section curve and the roughness curve, which are recorded under magnification, by numerical calculation, and is measured by moving a tracer of a roughness meter in a width direction and a circumferential direction.

The nitrogen-enriched layer is a layer in which a nitrogen content, which is formed in a surface layer of a race (outer race or inner race) or a rolling element, is increased. The layer can be formed by a treatment of, for example, carbonitriding, nitriding, nitrogen immersion, or the like. The nitrogen content in the nitrogen-enriched layer is preferably in a range of 0.1% to 0.7%. When the nitrogen content is less than 0.1%, there is no effect, so a rolling life is reduced particularly under a foreign matter contaminated condition. When the nitrogen content is larger than 0.7%, a hole called void is formed, or a residual austenite amount becomes too large to obtain hardness, thereby causing the life to be shorter. With respect to the nitrogen-enriched layer formed on the race, the nitrogen content is a value in a surface layer of 50 $\mu$m of the raceway surface after grinding, the value can be obtained by using, for example, wavelength-dispersive X-ray micro analyzer (EPMA).

Further, when the austenite grain size becomes larger than the grain size No. 10, the austenite grain diameter becomes finer, thereby making it possible to significantly improve the rolling fatigue life. When the austenite grain size is lower than the grain size No. 10, the rolling fatigue life is not significantly improved, so the austenite grain size is made in a range larger than the No. 10. Usually, the austenite grain size is equal to or larger than a grain size No. 11. It is desirable that the austenite grain diameter be as small as possible. However, it is difficult to obtain a grain size larger than a grain size No. 13. Note that the austenite grains of the bearing component as described above do not vary between in a surface portion having the nitrogen-enriched layer and in an inner portion inside the surface portion. Thus, positions to be objects of making the grain size No. be in the above-mentioned range are the surface layer portion and the inner portion. The austenite grains, on which traces of austenite grain boundaries immediately before quenching remain, for example, even after the quenching treatment, refer to grains based on the traces of the austenite grain boundaries.

The nitrogen content in the nitrogen-enriched layer may be in a range of 0.1% to 0.7%.

In a case where the member is a race, the nitrogen content may be a value in a surface layer 50 $\mu$m on a raceway surface after grinding.

The above-mentioned and other objects and characteristic points according to the present invention will be more apparent from descriptions made below with reference to the attached drawings.

Brief Description of the Drawings

Fig. 1 is a sectional view of a needle roller bearing.
Fig. 2 is a sectional view of a needle roller bearing used for a life test.
Fig. 3 is a graph of a roughness curve showing a state of a finished surface of a rolling element of a test bearing.
Fig. 4 is a graph of a roughness curve showing a state of a finished surface of a rolling element of a test bearing.
Fig. 5 is a graph of a roughness curve showing a state of a finished surface of a rolling element of a test bearing.
Fig. 6 is a schematic sectional view of a test apparatus.
Fig. 7 is a graph showing a result of the life test.
Fig. 8 is a sectional view of a tapered roller bearing.
Fig. 9A is a graph showing a metal contact ratio according to an example of the present invention.
Fig. 9B is a graph showing a metal contact ratio according to a comparative example of the present invention.
Fig. 10 is an overall schematic diagram of a double cylindrical test apparatus.
Fig. 11 is a schematic sectional view showing a rolling bearing according to an embodiment of the present invention.
Fig. 12 is a drawing illustrating a heat treatment method for the rolling bearing according to the embodiment of the present invention.
Fig. 13 is a drawing illustrating a modification of the heat treatment method for the rolling bearing according to the embodiment of the present invention.
Fig. 14A is a diagram showing a microstructure of a bearing component according to an example of the present invention, in particular, an austenite grain.
Fig. 14B is a diagram showing a microstructure of a conventional bearing component, in particular, an austenite grain.
Fig. 15A is a schematic diagram of an austenite grain boundary of Fig. 14A.
Fig. 15B is a schematic diagram of an austenite grain boundary of Fig. 14B.

Fig. 16 is a view showing a test piece for a static pressure breakage strength test (determination of a fracture stress value).

Fig. 17A is a schematic front view of a rolling fatigue life test machine.

Fig. 17B is a side view of the test machine of Fig. 17A.

Fig. 18 is a view showing a test piece for a static fracture toughness test.

Best Mode for carrying out the Invention

A rolling bearing includes as main components an inner race, an outer race, and a rolling element. In at least one of a rolling surface and end surfaces of the rolling element and raceway surfaces of inner and outer races (and a cone back face rib surface in a case of an inner race of a tapered roller bearing), innumerable minute concave recesses are formed randomly, thereby obtaining a fine rough surface. In the fine rough surface, an average area of the recesses is in a range of 30 to 100 $\mu$m$^2$, and Rymax of the surface in which the recesses are formed is in a range of 0.4 to 1.0. Further, when a surface roughness of each surface is determined in each of an axial direction and a circumferential direction and is indicated by a parameter Rqni, a value of a ratio "Rqni(L)/Rqni(C)" between an axial surface roughness Rqni(L) and a circumferential surface roughness Rqni(C) is equal to or lower than 1.0, and a surface roughness parameter Sk value is equal to or lower than -1.6 in both the axial direction and the circumferential direction. As a surface processing for obtaining such a fine rough surface, while special barrel finishing can be performed to obtain a predetermined finished surface, but a shot or the like may be used. By setting the average area of the minute concave recesses in a range from 30 to 100 $\mu$m$^2$, and Rymax of the surface in which the recesses are formed in a range of 0.4 to 1.0 $\mu$m, it is possible to exhibit a high oil film forming effect even under conditions in which an oil film is extremely thin. As a result, it is possible to obtain a sufficient long life effect even under an extremely severe lubrication condition in which an oil film parameter $\lambda = 0.13$.

A measuring method and conditions for the parameters Rymax and Rqni are explained with examples as follows. Note that, when surface properties expressed by those parameters are determined with respect to components such as rolling elements and a bearing ring of a rolling bearing, even a value obtained by performing measurement at one position is reliable enough as a representative value, but it is preferable to perform the measurement at two positions, for example, opposing each other in a diameter direction. Parameter calculation standard: JIS B 0601: 1994 (surfcom JIS 1994)

Cutoff type: Gaussian

Measurement length: 5 $\lambda$

Cutoff wavelength: 0.25 mm

Measurement magnification: x 10000

Measurement speed: 0.30 mm/s

Measurement position: Roller center

The number of measurement: 2

Measuring apparatus: Surface roughness measuring device surfcom 1400 A (TOKYO SEIMITSU CO., LTD.)

With regard to the minute concave recesses provided in a rolling contact surface of a roller, when an area percentage of the recesses with respect to the entire rolling contact surface falls in a range of 5 to 20%, an average area of the recesses falls in a range of 30 to 100 $\mu$m$^2$ while being summed up except for recesses each having an equivalent circular diameter of 3 $\mu$m$\Phi$ or less. When Rymax of the recesses is outside a range of 0.4 to 1.0 $\mu$m, the area percentage of the recesses with respect to the rolling contact surface is more than 20%, and the average area of the recesses is more than 100 $\mu$m$^2$, an effective length of contact tends to be reduced, and an effect of a long life tends to be reduced.

In performing quantitative measurement of the recesses, from an image obtained by enlarging the surface of the roller, it is possible to perform quantification using a commercially available image system. Further, use of a surface property testing method and a surface property testing device according to JP-A-2001-183124 allows a stable and accurate measurement. Analysis is performed assuming that flat portions of the surface are indicated as white portions and the minute recesses are indicated as black portions in the image. Measurement conditions are described as follows. Further, when the area and the average area of the recesses are measured with respect to the components such as the rolling elements and the raceway surface of the rolling bearing, even a value obtained by performing measurement at one position is reliable enough as a representative value, but it is preferable to perform the measurement, for example, at two positions.

Area percentage: Ratio of areas occupied by picture elements (black portions) in an observing sight range, which is smaller than a binarization threshold value ((brightness of a light portion + brightness of a dark portion)/2)

Average area: Sum of areas of black portions/total amount

Measurement sight: 826 μm x 620 μm (desirably 413 μm x 310 μm when a diameter of the roller is less than Φ4)

Measurement position: Roller center

The number of measurement: 2

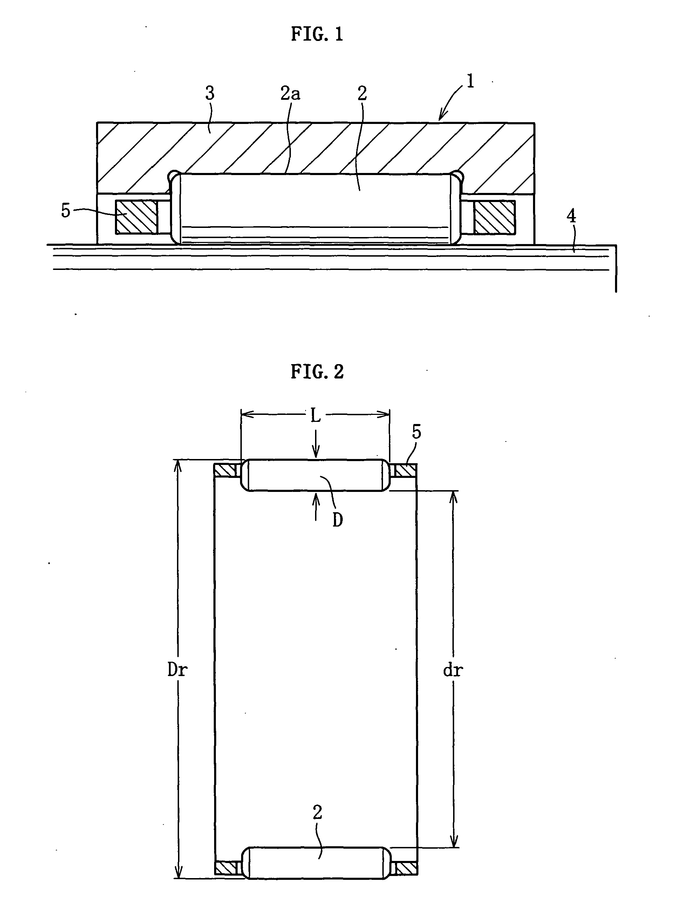

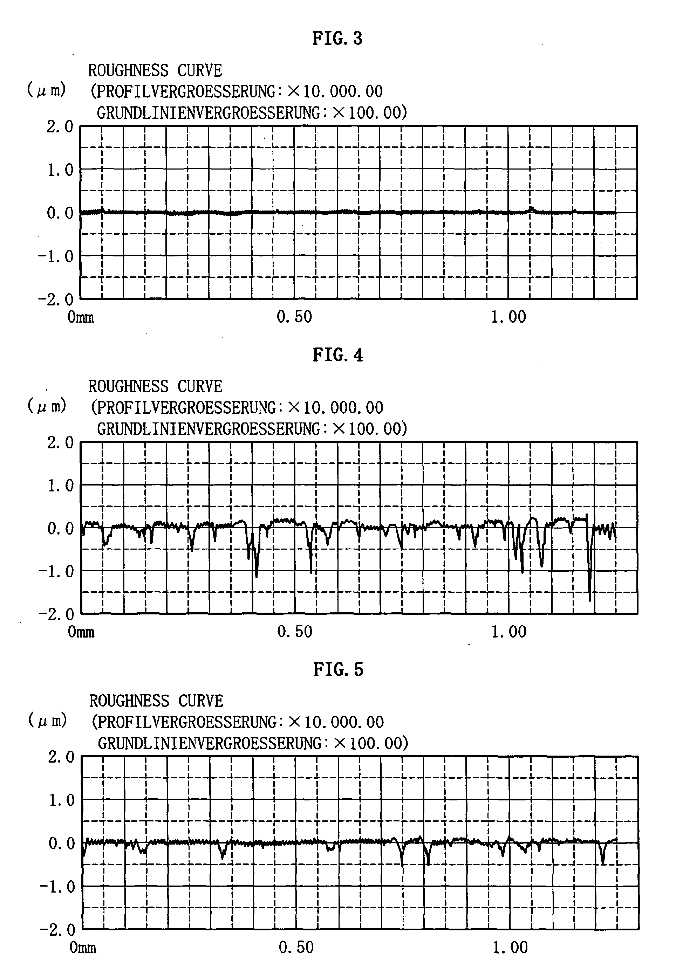

Fig. 1 shows a first example of a rolling bearing. A rolling bearing 1 is a needle roller bearing in which a needle roller 2 is incorporated into an outer race 3, the needle roller 2 serving as a rolling element. The needle roller 2 supports a mating shaft 4. Described below is a result of a life test carried out on produced needle roller bearings of a plurality of types, which have needle roller surfaces treated with surface treatments for providing different finished surfaces. A needle roller bearing used for the life test has an outer diameter Dr of 33 mm, an inner diameter dr of 25 mm, a diameter D of the needle roller 2 of 4 mm, and a length L of the needle roller 2 of 25.8 mm, employs 15 needle rollers, and is provided with a cage 5 as shown in Fig. 2. As test bearings, 3 different types of bearings including needle rollers of which surfaces are finished to have different roughnesses, that is, a bearing A (comparative example) which is subjected to super finishing after grinding, a bearing B (comparative example) having innumerable minute concave recesses randomly formed thereon, and a bearing C (example). States of finished surfaces of the needle rollers of the respective test bearings are shown in Figs. 3 to 5. Inparticular, Fig. 3 shows a surface roughness of the bearing A, Fig. 4 shows a surface roughness of the bearing B, and Fig. 5 shows a surface roughness of the bearing C, respectively. Further, a list of characteristic value parameters of the finished surfaces of the test bearings is shown in Table 1. Note that, in Fig. 1, the parameter Sk indicates a skewness of the roughness curve (ISO 4287: 1997), and serves as an index of a sample statistic value for knowing asymmetry of irregularity distribution. When the distribution is symmetric like in Gaussian distribution, the Sk value becomes near 0, and in a case where convex portions of the irregularities are eliminated, the Sk value becomes a negative value, and in the opposite case, the Sk value becomes a positive value. The Sk value can be controlled by selecting a rotational speed, a working time, work charging number, kind and size of a chip of a barrel grinder, and the like. For example, by making the Sk value be equal to or lower than -1.6 in both a width direction and a circumferential direction, the minute concave recesses constitute oil basins, so even when compression is effected, there are effects in that leakages of oil in a slide direction and a perpendicular direction are little, oil film formation is excellent, a state of oil film formation is favorable, and a surface damage is suppressed to a minimum. Note that a value of Rqni (L/C) of each of the bearings B and C is equal to or lower than 1.0, and a value Rqni (L/C) of the bearing A is around 1.0.

Table 1

| Bearing | Rqni | Sk | Ryni (μm) | Rymax | Area percentage (%) | Average area (μm²) | Rqni (L/C) |
|---|---|---|---|---|---|---|---|
| A (Comparative example) | 0.01 to 0.03 | -0.8 to 0.9 | 0.1 to 0.2 | 0.1 to 0.3 | - | - | - |

(continued)

| Bearing | Rqni | Sk | Ryni (μm) | Rymax | Area percentage (%) | Average area (μm²) | Rqni (L/C) |
|---|---|---|---|---|---|---|---|
| B (Comparative example) | 0.10 to 0.20 | -5.0 to -2.0 | 1.1 to 1.5 | 1.1 to 2.0 | 24 to 40 | 105 to 150 | ≤1.0 |
| C (Example) | 0.05 to 0.09 | -4.9 to -1.6 | 0.4 to 1.0 | 0.4 to 1.0 | 5 to 20 | 30 to 100 | ≤1.0. |

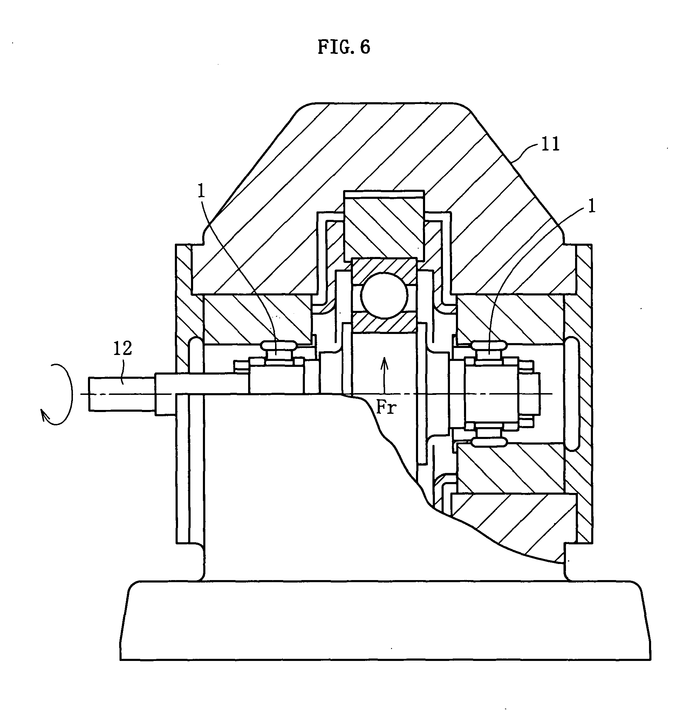

Used as a test apparatus is a radial load testing machine 11 as schematically shown in Fig. 6, in which test bearings 1 are attached to both sides of a rotating shaft 12, and rotation and a load are applied thereto to perform a test. An inner race (mating shaft) used in the test is finished to have Ra 0.10 to 0.16 μm obtained by polish finishing. An outer race is finished in the same manner.

Test conditions are as follows.

Bearing radial load: 2000 kgf

Rpm: 4000 rpm

Lubricant: Cresec oil H8 (2 cst under the test conditions)

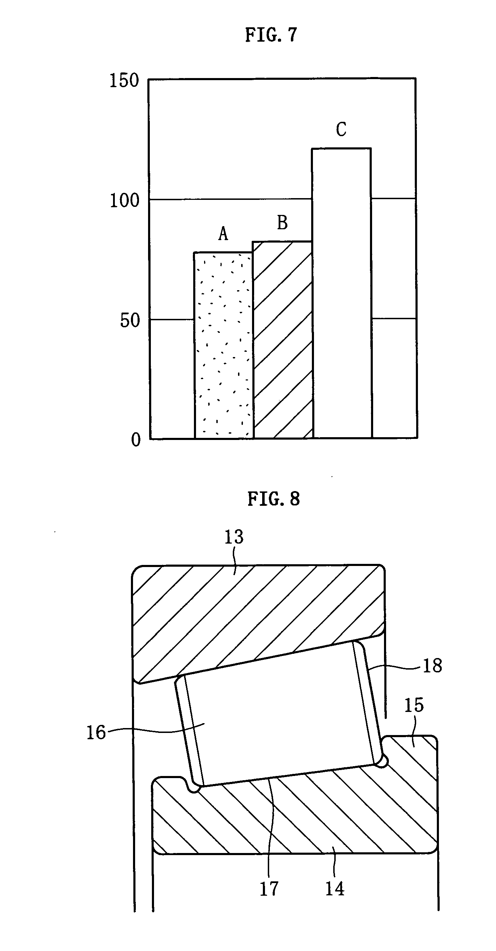

Fig. 7 shows a result of a life test under a condition of an oil film parameter λ of 0.13. A vertical axis of the figure represents an L10 life (h). As is obvious from the figure, the bearing A has 78 h and the bearing B has 82 h, while the bearing C has 121 h. As shown in this data, the bearing C according to the example can obtain a long life effect even under an extremely severe lubrication condition, that is, the oil film parameter λ of 0.13.

Next, Fig. 8 shows a tapered roller bearing as a second exemplary rolling bearing. The tapered roller bearing is a radial bearing using tapered rollers 16 as rolling elements. Between a raceway of an outer race 13 and a raceway of an inner race 14, there are interposed the plurality of tapered rollers 16 in a freely rolling manner. During operation, a rolling contact surface 17 of each of the tapered rollers 16 comes into rolling contact with the raceways of the outer race 13 and the inner race 14, and a large end face 18 of the tapered roller 16 comes into slide contact with an inner surface of a cone back face rib 15 of the inner race 14. Thus, in a case of the tapered roller 16, the innumerable minute concave recesses may be randomly formed in the large end face 18 as well as in the rolling contact surface 17. In a similar manner, in a case of the inner race 14, the innumerable minute concave recesses may be randomly formed in the inner surface of the cone back face rib 5 as well as in the raceway surface.

Description will be made of life tests carried out on conventional tapered roller bearings A and B including tapered rollers having smooth-finished rolling contact surfaces (comparative examples), bearings C to E including tapered rollers having rolling contact surfaces in which innumerable minute concave recesses are randomly formed (comparative example), and bearings F and G (examples) (refer to Table 2). The bearings A to G used are tapered roller bearings in each of which an outer diameter of an outer race is 81 mm and an inner diameter of an inner race is 45 mm. Note that rolling contact surfaces of rollers of the bearings A and B according to comparative examples are subjected to super finishing after grinding and are not machined to have recesses. Each of rolling contact surfaces of rollers of the bearings C to E according to comparative examples and the bearings F and G according to examples are subjected to special barrel finishing so that innumerable minute concave recesses are randomly formed thereon. Note that Rqni (L/C) of each of the roller bearings C to G is equal to or lower than 1.0 and Rqni (L/C) of each of the roller bearings A and B is around 1.0.

Table 2

| Test bearing | | Average area (μm²) | Ryni (μm) | Area percentage (%) | Sk | Rqni (L/C) | Rymax | Life time (h) |
|---|---|---|---|---|---|---|---|---|
| Comparative example | A | - | 0.32 | - | -0.9 | - | 0.5 | 11.5 |
| | B | - | 0.41 | - | -0.7 | - | 0.7 | 9.2 |
| | C | 132 | 1.47 | 25 | -4 | ≤1.0 | 1.9 | 15.5 |
| | D | 113 | 1.12 | 19 | -3.2 | ≤1.0 | 1.2 | 50.5 |
| | E | 30 | 0.32 | 5 | -1.8 | ≤1.0 | 0.5 | 19.8 |

(continued)

| Test bearing | | Average area ($\mu m^2$) | Ryni ($\mu$m) | Area percentage (%) | Sk | Rqni (L/C) | Rymax | Life time (h) |
|---|---|---|---|---|---|---|---|---|
| Example | F | 94 | 0.95 | 17 | -2.6 | ≤1.0 | 1 | 129.6 |
| | G | 52 | 0.52 | 5 | -1.8 | ≤1.0 | 0.6 | Equal to or more than 200 |

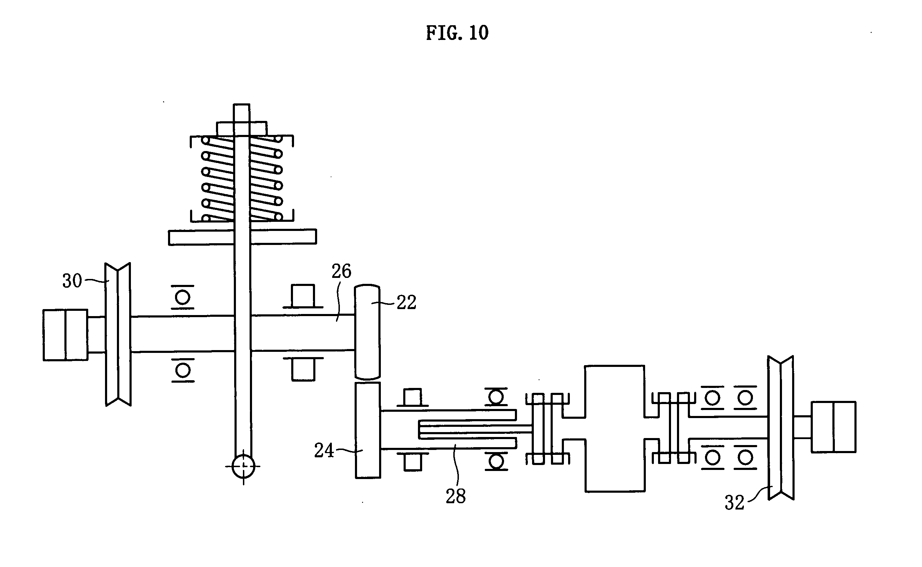

A double cylinder testing machine as shown in Fig. 10 is used to perform a peeling test to evaluate a metal contact ratio. In Fig. 10, each of a driving-side cylinder 22 (D cylinder: Driver) and a driven-side cylinder 24 (F cylinder: Follower) is attached to one end of respective corresponding cylinders. Two rotating shafts 26 and 28 can be driven by different motors through intermediation of pulleys 30 and 32, respectively. The shaft 26 on the D cylinder 22 side is driven by the motor and the F cylinder 24 is made to freely roll so as to be driven by the D cylinder 22. There are prepared two types of surface processings according to a comparative example and an example of the F cylinder 24. The details including test conditions are represented in Table 3.

Table 3

| Testing machine | Double cylinder testing machine (refer to Fig. 9) | | |
|---|---|---|---|
| Driving-side cylinder (D cylinder) | φ40 × L12, Secondary radius of curvature R60 SUJ2 Standard goods + outer surface super finishing | | |
| Driven-side cylinder (F cylinder) | φ40 × L12, Straight SUJ2 Standard goods + outer surface super finishing Surface treatment | | |
| | | Comparative example | Example |
| | Average area ($\mu m^2$) | 145 | 83 |
| | Ryni ($\mu$m) | 1.21 | 0.73 |
| | Area percentage (%) | 20 | 15 |
| Rpm | 2000 rpm | | |
| Load | 2156 N (220 kgf) | | |
| Maximum contact pressure Pmax | 2.3 GPa | | |
| Osculating ellipse (2a × 2b) | 2.34 mm × 0.72 mm | | |
| The number of time (s) of load application | $2.4 \times 10^5$ Time (s) (2h) | | |
| Ambient temperature | Normal temperature | | |
| Refueling method | Refueling with felt pad | | |
| Lubricating oil | JOMO HI SPEED FLUID (VG1.5) | | |

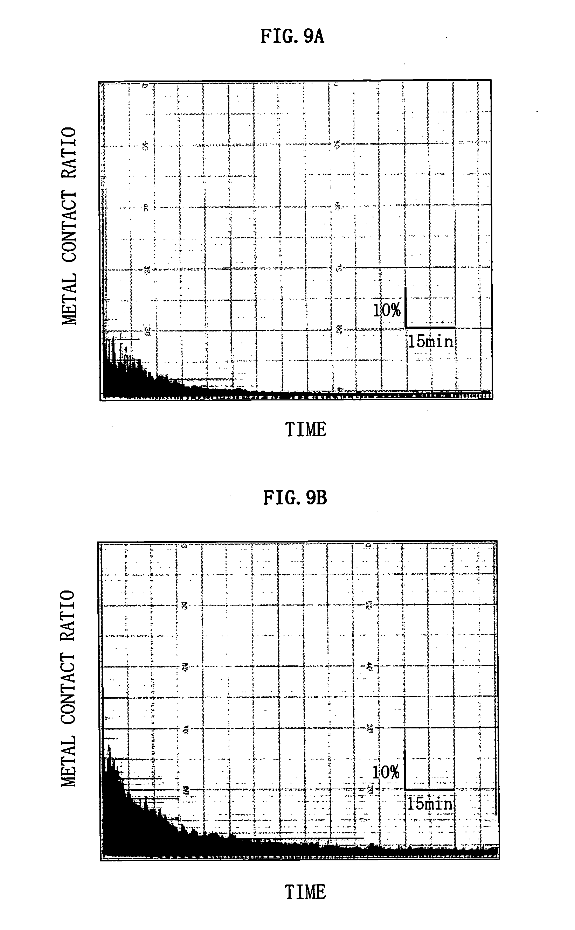

Comparative data of the metal contact ratio is shown in Figs. 9A and 9B. In each of the figures, a horizontal axis indicates an elapsed time and a vertical axis indicates the metal contact ratio. Fig. 9A shows a metal contact ratio of the rolling contact surfaces of the rollers of the bearings according to the examples. Fig. 9B shows a metal contact ratio of the rolling contact surfaces of the rollers of the bearings according to the comparative examples. When comparison is made between those figures, as compared to the comparative examples, in the examples, improvements of the metal contact ratio can be clearly recognized. In other words, an oil film forming ratio (= 100% - metal contact ratio) of the bearings according to the examples is higher by 10% at a start of operation and by 2% at an end of the test (2 hours later), than that of the bearings according to the comparative examples.

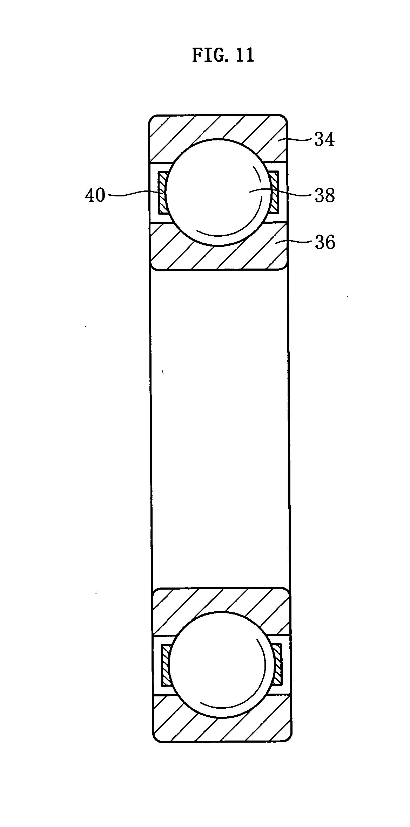

Next, Fig. 11 shows a section of a deep groove ball bearing as another exemplary rolling bearing. The rolling bearing includes as main components thereof an outer race 34, an inner race 36, a plurality of rolling elements 38 interposed between a raceway of the outer race 34 and a raceway of the inner race 36 in a freely rolling manner, and a cage 40. In this case, the rolling elements 38 are bolls, and are retained in a circumferential direction by the cage 40 at predetermined intervals. At least one of bearing components, which are the outer race 34, the inner race 36, and the rolling elements 38 constituting the rolling bearing, includes a nitrogen-enriched layer. As a specific example of a treatment for forming the nitrogen-enriched layer, a heat treatment including a carbonitriding treatment will be described.

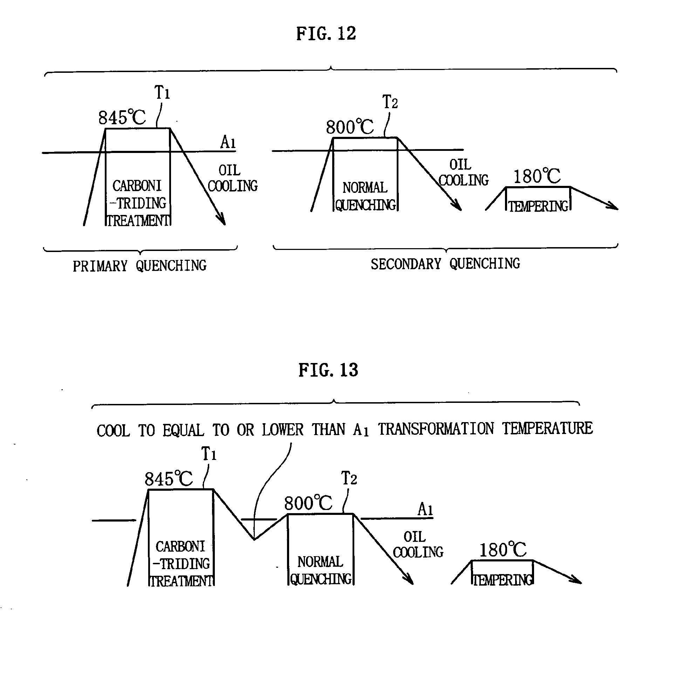

Fig. 12 is a diagram for illustrating a heat treatment method for a rolling bearing according to an embodiment of the present invention. Fig. 13 is a diagram for illustrating a modification thereof. Fig. 12 shows a heat treatment pattern of a method in which a primary quenching and a secondary quenching are performed. Fig. 13 shows a heat treatment pattern of a method in which a material is cooled to be below an $A_1$ transformation temperature halfway through the quenching, and is thereafter reheated to be quenched ultimately. In those figures, in a treatment $T_1$, while carbon and nitrogen are diffused in a steel basis material, penetration of carbon is performed to a sufficient degree, and the steel basis is thereafter cooled to below the $A_1$ transformation temperature. Next, in a treatment $T_2$ of the figures, the steel basis material is reheated to equal to or above the $A_1$ transformation temperature and below the temperature thereof in the treatment $T_1$, and is then subjected to oil quenching.

Due to the above-mentioned heat treatment, as compared to conventional carbonitriding quenching, that is, quenching performed once following a carbonitriding treatment without any other treatment, a cracking resistance can be enhanced while a surface layer portion is carbonitrided, thereby making it possible to reduce a rate of dimensional change by aging. The rolling bearings according to the present invention which are manufactured through the heat treatment pattern of Fig. 12 or 13 have microstructures in which an austenite grain size is equal to or smaller than a half of a conventional austenite grain size. The bearing component, which has been subjected to the above-mentioned heat treatments, has a long rolling fatigue life, so it is possible to enhance the cracking resistance and reduce the rate of dimensional change by aging. In order to refine the grains, there is performed the heat treatment processing for lowering the secondary quenching temperature. Therefore, an amount of remaining austenite grains decreases in the surface layer and an inside thereof. As a result, it is possible to obtain an excellent cracking resistance and rate of dimensional change by aging.

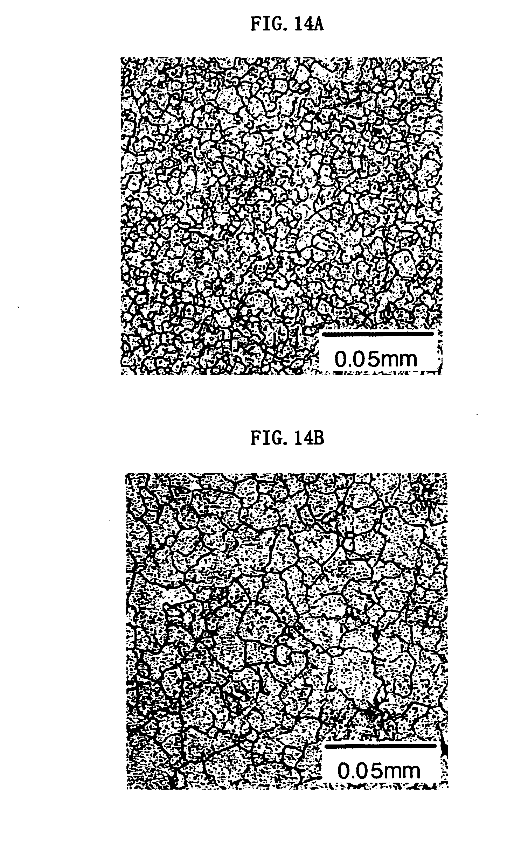

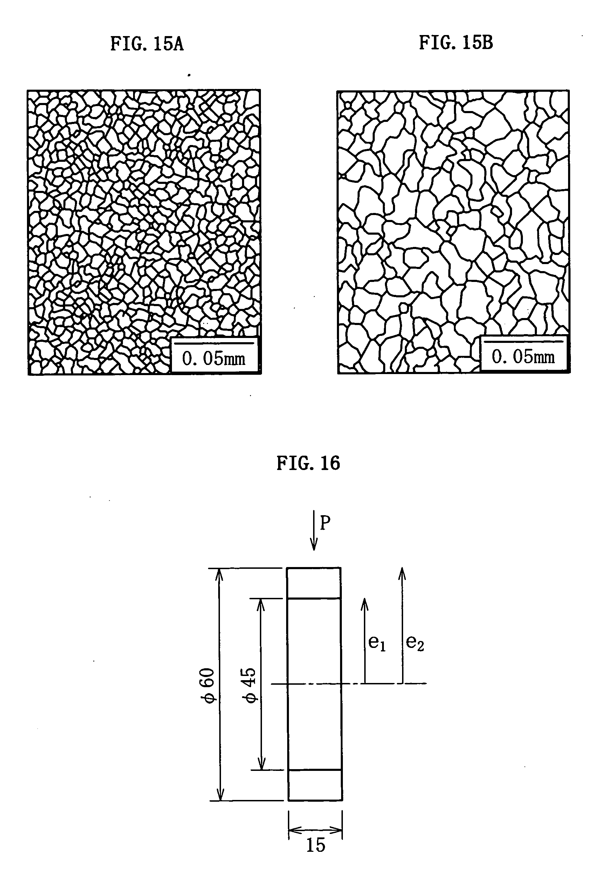

Figs. 14A and 14B are views each showing a microstructure of a bearing component, in particular, an austenite grain. Fig. 14A shows an exemplary bearing component according the present invention. Fig. 14B shows a conventional bearing component. That is, Fig. 14A shows an austenite grain size in the raceway of the rolling bearing according to the embodiment of the present invention to which the heat treatment pattern of Fig. 12 is applied. In order to make a comparison, an austenite grain size of a bearing steel obtained by the conventional heat treatment method is shown in Fig. 14B. Further, Figs. 15A and 15B show in diagrammatic forms the austenite grain sizes of Figs. 14A and 14B, respectively. According to structures exhibiting those austenite grain sizes, the conventional austenite grain size corresponds to JIS standard grain size No. 10, and when the heat treatment method of Fig. 12 or 13 is employed, it is possible to obtain fine grains each having JIS standard grain size No. 12. Further, a mean grain size of Fig. 14A was 5.6 $\mu$m according to a measurement by a section method.

Next, examples will be described.

EXAMPLE 1

By using a JIS standard SUJ2 material (1.0 mass percent C - 0.25 mass percent Si - 0.4 mass percent Mn - 1.5 mass percent Cr), the following tests were conducted, that is, (1) hydrogen amount measurement, (2) grain size measurement, (3) Charpy impact test, (4) breaking stress value measurement, and (5) rolling fatigue test. Table 1 shows results of those.

Table 4

| Sample | A | B | C | D | E | F | Conventional carbonitriding treatment | Normal quenching |
|---|---|---|---|---|---|---|---|---|
| Secondary quenching temperature (°C) | 780 | 800 | 815 | 830 | 850 | 870 | - | - |
| Hydrogen amount (ppm) | - | 0.37 | 0.48 | 0.38 | 0.42 | 0.40 | 0.72 | 0.33 |
| Grain size (JIS) | - | 12 | 11.5 | 11 | 30 | 15 | 10 | 10 |

(continued)

| Sample | A | B | C | D | E | F | Conventional carbonitriding treatment | Normal quenching |
|---|---|---|---|---|---|---|---|---|
| Charpy impact value (J/cm$^2$) | - | 6.65 | 5.45 | 6.30 | 6.20 | 6.30 | 5.33 | 6.70 |
| Breaking stress value (MPa) | - | 2840 | 2780 | 2550 | 2850 | 2700 | 2330 | 2770 |
| Rolling fatigue life ratio (Lm) | - | 5.4 | 4.2 | 3.5 | 2.9 | 2.8 | 3.1 | 1 |

Production history of each of the samples is described below.

The samples A to D (examples of the present invention): Carbonitriding treatment 850°C, and retention time 150 minutes. An atmosphere was given as a mixed gas of RX gas and an ammonia gas. In the heat treatment pattern as shown in Fig. 12, from a time when the carbonitriding treatment temperature reached 850°C, the primary quenching was performed, and then, the secondary quenching was performed after heating the sample to fall within a temperature range of 780°C to 830°C which was lower than the carbonitriding treatment temperature. Note that, the sample A having the secondary quenching temperature of 780°C was not sufficiently quenched, so it was left out of objects to be tested.

The samples E and F (comparative examples): The carbonitriding treatment was performed in the same history as that of the examples A to D of the present invention, and the secondary quenching was performed by setting the carbonitriding treatment temperature of 850°C or higher, that is, 850°C to 870°C.

Conventional carbonitrided product (comparative example): Carbonitriding treatment 850°C, and retention time 150 minutes. An atmosphere was given as the mixed gas of an RX gas and an ammonia gas. The quenching was performed without any other process from a time when the carbonitriding treatment temperature was obtained and the secondary quenching was not performed.

Normal quenched product (comparative example): The carbonitriding treatment was not performed and the product was heated to 850°C to be quenched. The secondary quenching was not performed.

Next, testing methods will be described.

(1) Hydrogen amount measurement

As a hydrogen amount, an amount of nondiffusible hydrogen in steel was analyzed by a DH-103 type hydrogen analyzer manufactured by LECO Corporation. An amount of diffusible hydrogen is not measured. A specification of the DH-103 type hydrogen analyzer manufactured by LECO Corporation is shown below.
Analysis range: 0.01 to 50.00 ppm
Analysis accuracy: $\pm 0.1$ ppm or $\pm 3\%$H (larger one of those)
Analysis sensitivity: $\pm 0.1$ ppm
Detection method: Thermal conductivity method
Sample size in weight: 10 mg to 35 mg (maximum: diameter 12 mm x length 100 mm)
Furnace temperature range: 50°C to 1100°C
Reagent: Anhydron $Mg(ClO_4)_2$, ascarite NaOH
Carrier gas: Nitrogen gas, gas dosing gas: hydrogen gas, both gases have purity of 99.99% or more and a pressure of 40 psi (2. 8 kgf/cm$^2$).

An outline of a measurement procedure is as follows. A sample taken by a dedicated sampler is inserted into the hydrogen analyzer while being contained in the sampler. Diffusible hydrogen inside thereof is introduced to a thermal conductivity detector by a nitrogen carrier gas. The diffusible hydrogen is not subjected to measurement in the example 1. Next, the sample is taken out of the sampler and is heated in a resistance heating furnace, and nondiffusible hydrogen is introduced to the thermal conductivity detector by the nitrogen carrier gas. By measuring the thermal conductivity in the thermal conductivity detector, an amount of the nondiffusible hydrogen can be known.

(2) Grain size measurement

A grain size measurement was performed based on an austenite grain size testing method for JIS G 0551 steel.

(3) Charpy impact test

A Charpy impact test was performed based on a Charpy impact testing method for a JIS Z 224 metal material. As a test piece, there was used a U notch test piece (JIS No. 3 test piece) according to JIS Z 2202.

(4) Breaking stress value measurement

Fig. 16 shows a test piece for a static pressure breakage strength test (determination of a fracture stress value). A load is applied in a P direction of the figure and a load applied until breakage occurs is measured. After that, an obtained breaking load is converted into a stress value by the following stress calculation formula for a curved beam. Note that, the test piece is not limited to that shown in Fig. 16, and a test piece of another configuration may be used.

When a fiber stress on a convex surface of the test piece of Fig. 16 is represented by a symbol $\sigma_1$, and a fiber stress on a concave surface is represented by a symbol $\sigma_2$, $\sigma_1$ and $\sigma_2$ can be determined by the following formulas (Mechanical Engineers' Handbook A4 volume strength of materials A4-40). In this case, a symbol N represents an axial force of a section including an axis of an annular test piece, a symbol A represents a lateral sectional area, a symbol $e_1$ represents an internal radius, and a symbol $e_2$ represents an external radius. Further, a symbol K represents a section modulus of the curved beam.

$$\sigma_1 = (N/A) + \{M/(A\rho_0)\}\ [1 + e_1/\{\kappa(\rho_0 + e_1)\}]$$

$$\sigma_2 = (N/A) + \{M/(A\rho_0)\}\ [1 - e_2/\{\kappa(\rho_0 - e_2)\}]$$

$$\kappa = -(1/A)\int A\{\eta/(\rho_0 + \eta)\}dA$$

(5) Rolling fatigue life

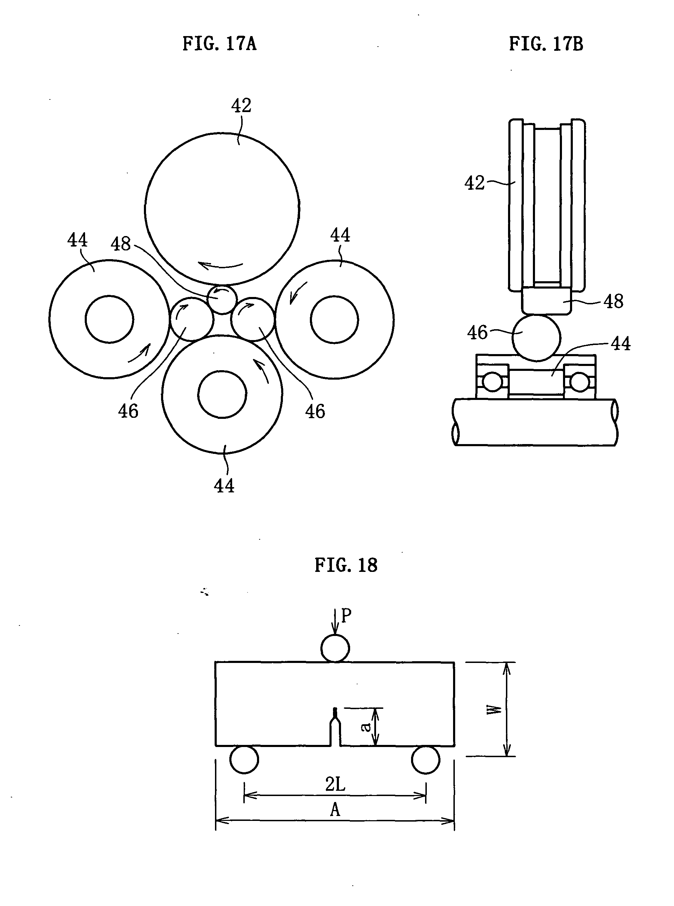

Test conditions of a rolling fatigue life test are shown in Table 5. Figs. 17A and 17B each are a schematic view of a rolling fatigue life testing machine. Fig. 17A is a front view and Fig. 17B is a side view. In Figs. 17A and 17B, a rolling fatigue life test piece 48 is driven by a driving roll 48 and rotates while coming into contact with a ball 46. The ball 46 is a 3/4-inch ball, is guided by a guide roll 44, and rolls while exerting/receiving a high contact pressure on/from the rolling fatigue life test piece 48.

The test results of the example 1 shown in Table 4 are described below.

(1) Hydrogen amount

The conventional carbonitrided product left after being subjected to the carbonitriding treatment has the hydrogen amount of 0.72 ppm, which is a very high value. The reason for this is considered to be because ammonia ($NH_3$) contained in the atmosphere of the carbonitriding treatment degrades so that hydrogen enters inside the steel. On the other hand, in the samples B to D, the hydrogen amount is reduced to 0.37 to 0.40 ppm, which is about a half the above-mentioned value. Such the hydrogen amount is at the same level as that of a normal quenched product.

Due to the reduction of the hydrogen amount as described above, stiffening of the steel caused by solution of hydrogen can be alleviated. That is, due to the reduction of the hydrogen amount, Charpy impact values of the samples B to D of the examples according to the present invention are improved to a large degree.

(2) Grain size

With regard to the grain size, in a case where the secondary quenching temperature is lower than a temperature of quenching (primary quenching) in the carbonitriding treatment, that is, in the cases of the samples B to D, the austenite grain size is remarkably refined to grain sizes No. 11 to 12. The austenite grains of the samples E and F, the conventional carbonitrided product, and the normal quenched product have a grain size No. 10, and are grains more coarse than those of the samples B to D of the examples according to the present invention.

(3) Charpy impact test

According to Table 4, while the Charpy impact value of the conventional carbonitrided product is 5.33 J/cm$^2$, the Charpy impact value of each of the samples B to D of the examples according to the present invention is 6. 30 to 6. 65 J/cm$^2$, which are higher values. Of those, the one having lower secondary quenching temperature tends to exhibit higher Charpy impact value. The Charpy impact value of the normal quenched product is 6.70 J/cm$^2$ which is a high value.

(4) Breaking stress value measurement

The above-mentioned breaking stress value corresponds to the cracking resistance. According to Table 4, the conventional carbonitrided product has the breaking stress value of 2330 MPa.
As compared to this, the breaking stress values of the samples B to D are obtained as improved values, that is, 2650 to 2840 MPa.
The breaking stress value of the normal quenched product is 2770 MPa and the improved cracking resistances of the samples B to D are obtained as a benefit of the effects due to the reduction of the hydrogen content as well as the refinement of the austenite grain.

(5) Rolling fatigue test

According to Fig. 4, since the normal quenched product does not have a carbonitrided layer on a surface layer portion thereof, a rolling fatigue life $L_{10}$ thereof is the lowest. As compared to this, the rolling fatigue life of the conventional carbonitrided product is 3.1 times larger. The rolling fatigue life of each of the samples B to D is significantly enhanced as compared to the conventional carbonitrided product. The samples E and F each have substantially the same rolling fatigue life as that of the conventional carbonitrided product.

To sum up the above-mentioned results, in each of the samples B to D of the examples of the present invention, the hydrogen content decreases, the austenite grain size is refined to be higher than No. 11, and the Charpy impact value, the cracking resistance, and the rolling fatigue life are improved.

EXAMPLE 2

Next, an example 2 will be described. An X material, a Y material, and a Z material below were subjected to a series of tests. As a heat treatment material, JIS standard SUJ2 material (1.0 mass percent C - 0.25 mass percent Si - 0.4 mass percent Mn - 1.5 mass percent Cr) was used commonly for each of the X to Z materials. Manufacturing histories of the X to Z materials are as follows.
X material (comparative example): Only normal quenching (carbonitriding treatment is not performed).
Y material (comparative example): Quenching was performed after the carbonitriding treatment without any other process (conventional carbonitriding quenching). Carbonitriding treatment temperature 845°C, and retention time 150 minutes. An atmosphere of the carbonitriding treatment was RX gas + ammonia gas.
Z material (example of the present invention) : A bearing steel which underwent the heat treatment pattern of Fig. 12. Carbonitriding treatment temperature 845°C, and the retention time 150 minutes. An atmosphere of carbonitriding treatment was RX gas + ammonia gas. The last quenching temperature was 800°C.

(1) Rolling fatigue life

Test conditions and a testing device for the rolling fatigue life are, as described above, shown in Table 5 and Figs. 17A and 17B. Results of the rolling fatigue life test are shown in Table 6.
Table 5

| Test piece | $\varphi 12 \times L22$ Cylindrical test piece |
|---|---|
| The number of times of test | 10 |
| Mating steel ball | 3/4 Inch (19.05 mm) |
| Contact pressure | 5.88 GPa |
| Loading speed | 46240 opm |
| Lubricating oil | Turbine VG68 Forced circulating lubrication |

Table 6

| Material type | Life (the number of time(s) of loading) | | Ratio of $L_{10}$ |
| --- | --- | --- | --- |
| | $L_{19}$ ($\times 10^4$ Times) | $L_{59}$ ($\times 10^4$ Times) | |
| Material X | 8017 | 18648 | 1.0 |
| Material Y | 24656 | 33974 | 3.1 |
| Material Z | 43244 | 69031 | 5.4 |

According to Table 6, the Y material of the comparative example exhibits a 3.1 times larger $L_{10}$ life (life in which one of ten test pieces fractures) than that of the X material which is subjected to only the normal quenching in the same manner as in the comparative example. In this case, an effect of a longer life due to the carbonitriding treatment is observed. On the other hand, the Z material of the example according to the present invention exhibits a 1.74 times longer life than that of the B material, and a 5.4 times longer life than that of the X material. An efficient cause of such the improvement is considered to be the refinement of the microstructure.

(2) Charpy impact test

Charpy impact test was performed using a U notch test piece by a method according to JISZ2242 as described above. Test results are shown in Table 7.
Table 7

| Material type | Charpy impact value (J/cm$^2$) | Ratio of impact value |
| --- | --- | --- |
| Material X | 6.7 | 1.0 |
| Material Y | 5.3 | 0.8 |
| Material Z | 6.7 | 1.0 |

Charpy impact value of the Y material (comparative example) which was subjected to the carbonitriding treatment was not larger than that of the X material (comparative example) which was subjected to the normal quenching, while the same value as that of the X material was obtained for the Z material.

(3) Static fracture toughness value test

Fig. 18 shows a test piece for a static fracture toughness test. A precrack of about 1 mm was introduced to a notch portion of the test piece. After that, a static load due to three-point bending was applied thereto and a breaking load P was determined. Used for calculation of a fracture toughness value ($K_1C$ value) was an equation (I). Test results are shown in Table 8.

$$K1c = (PL\sqrt{a}/BW^2)\{5.8 - 9.2(a/W) + 43.6(a/W)^2 - 75.3(a/W)^3 + 77.5(a/W)^4\} \ldots (I)$$

Table 8

| Material type | Number of times of test | $K_{-1}C$ (MPa$\sqrt{m}$) | Ratio of $K_1C$ |
| --- | --- | --- | --- |
| Material X | 3 | 16.3 | 1.0 |
| Material Y | 3 | 16.1 | 1.0 |

(continued)

| Material type | Number of times of test | $K_{-1}C$ (MPa$\sqrt{m}$) | Ratio of $K_1C$ |
|---|---|---|---|
| Material Z | 3 | 18.9 | 1.2 |

A depth of the precrack is larger than a depth of a carbonitrided layer, so there is no difference between the X material and the Y material according to the comparative examples. However, as compared to the comparative examples, about 1.2 times larger value could be obtained for the Z material of the example according to the present invention.

(4) static pressure breakage strength test

As a static pressure breakage test piece, a test piece having a shape shown in Fig. 16 was used as described above. In the figure, a load was added in the P direction to perform the static pressure breakage strength test. Test results are shown in Table 9.
Table 9

| Material type | Number of times of test | Static pressure breakage strength (kgf) | Ratio of static pressure breakage strength |
|---|---|---|---|
| Material X | 3 | 4200 | 1.00 |
| Material Y | 3 | 3500 | 0.84 |
| Material Z | 3 | 4300 | 1.03 |

The Y material, which is subjected to the carbonitriding treatment, exhibits a little lower value than the X material which is subjected to the normal quenching. However, the Z material of the example according to the present invention has an enhanced static pressure breakage strength as compared to the Y material and is at a level compared favorably with the X material.

(5) Dimensional change rate by aging

Results of measurement for a dimensional change rate by aging under conditions of retention temperature 130°C, and retention time 500 hours are shown in Table 10 together with a surface hardness and a residual austenite amount (depth of 50 $\mu$m).
Table 10

| Material type | Number of times of test | Surface hardness (HRC) | Residual $\gamma$ amount (%) | Dimensional change rate ($\times 10^{-3}$) | Ratio of dimensional change rate |
|---|---|---|---|---|---|
| Material X | 3 | 62.5 | 8.8 | 18 | 1.0 |
| Material Y | 3 | 63.6 | 30.5 | 35 | 1.9 |
| Material Z | 3 | 60.0 | 11.8 | 22 | 1.2 |

As compared to the dimensional change rate of the Y material having a large residual austenite amount, the dimensional change rate of the Z material of the example according to the present invention is suppressed to be lower than a half.

EXAMPLE 3

Table 11 shows results of a test conducted for a relationship between the nitrogen content and the rolling life under a condition of foreign matter incorporation. In this test, the tapered roller bearing shown in Fig. 8 is used. In examples 1 to 5, all the outer race 13, the inner race 14, and the tapered rollers 16 are manufactured while being applying with the heat treatment pattern shown in Fig. 12. Further, on the surface of the tapered roller, the innumerable minute concave recesses shown in Table 1 and Table 2 are randomly formed. Note that, a comparative example 1 is a normal quenched product, and a comparative example 2 is a normal carbonitrided product. A comparative example 3 shows a case where there is an excess of only a nitrogen amount although the same treatment as that of the examples of the present invention is applied. Test results are as follows.

Test bearing: Tapered roller bearing 30206 (inner/outer races and rollers are made of high-carbon chromium bearing steel of a second class according to JIS (made of SUJ2))
Radial load: 17.64 kN
Axial load: 1.47 kN
Rpm: 2000 rpm
Ratio of hard foreign matter content: 1 g/L

Table 11

| No. | Nitrogen content (%) | Residual austenite (%) | Hardness (Hv) | Rolling life under a condition of foreign matter incorporation (h) | Austenite grain size | Remark |
|-----|------|------|------|------|------|------|
| 1 | 0.11 | 14 | 725 | 321 | 11.8 | Example 1 |
| 2 | 0.16 | 18 | 735 | 378 | 12.0 | Example 2 |
| 3 | 0.18 | 20 | 730 | 362 | 11.9 | Example 3 |
| 4 | 0.32 | 22 | 730 | 395 | 12.1 | Example 4 |
| 5 | 0.61 | 24 | 715 | 434 | 12.2 | Example 5 |
| 6 | 0 | 8 | 770 | 72 | 9.8 | Comparative example 1 |
| 7 | 0.32 | 32 | 710 | 155 | 10.0 | Comparative example 2 |
| 8 | 0.72 | 31 | 700 | 123 | 12.0 | Comparative example 3 |

From Table 13, it is understood that with respect to the examples 1 to 5, the nitrogen content and the life at the time of foreign matter incorporation are substantially proportional to each other. Note that, it is preferable that considering that the rolling life under the condition of foreign matter incorporation of the comparative example 3 having the nitrogen content of 0.72 is reduced to an extreme, an upper limit of the nitrogen content be 0.7.

The embodiments as disclosed here are only examples in all respects, and should not be considered to be limitations. Scope of the present invention is given by scope of claims rather than the above-mentioned descriptions. It is intended that the scope of the present invention includes all modifications within meaning and scope equivalent to the scope of claims.

**Claims**

1.  A rolling bearing, comprising a rolling element having innumerable minute concave recesses randomly formed at least on a surface thereof, wherein an average area of the recesses is in a range of 30 to 100 $\mu m^2$, and Rymax is in a range of 0.4 to 1.0.

2.  A rolling bearing according to claim 1, wherein: at least one of an outer member, an inner member, and the rolling element of the rolling bearing has a nitrogen-enriched layer; and an austenite grain size in the nitrogen-enriched layer is in a range larger than a grain size No. 10.

3.  A rolling bearing according to claim 1 or 2, wherein when a surface roughness of the surface having the recesses formed thereon is expressed by a parameter Rqni, a value of a ratio "Rqni (L) /Rqni (C) " between an axial surface roughness Rqni(L) and a circumferential surface roughness Rqni(C) is equal to or lower than 1.0.

4.  A rolling bearing according to claim 2 or 3, wherein a nitrogen content in the nitrogen-enriched layer is in a range of 0.1% to 0.7%.

5.  A rolling bearing according to claim 4, wherein: the at least one of the outer member, the inner member, and the rolling element comprises a race; and the nitrogen content is a value in a surface layer of 50 $\mu$m on a raceway surface after grinding.

## FIG. 1

## FIG. 2

## FIG. 3

ROUGHNESS CURVE
($\mu$m)　(PROFILVERGROESSERUNG: ×10. 000. 00
　　GRUNDLINIENVERGROESSERUNG: ×100. 00)

## FIG. 4

ROUGHNESS CURVE
($\mu$m)　(PROFILVERGROESSERUNG: ×10. 000. 00
　　GRUNDLINIENVERGROESSERUNG: ×100. 00)

## FIG. 5

ROUGHNESS CURVE
($\mu$m)　(PROFILVERGROESSERUNG: ×10. 000. 00
　　GRUNDLINIENVERGROESSERUNG: ×100. 00)

FIG. 6

## FIG. 7

## FIG. 8

FIG. 9A

FIG. 9B

20

FIG. 10

EP 1 770 292 A1

FIG. 11

## FIG. 12

| | |
|---|---|
| 845°C T₁ | 800°C T₂ |
| A₁ | |
| CARBONI-TRIDING TREATMENT | OIL COOLING |
| | NORMAL QUENCHING |
| | OIL COOLING |
| | 180°C TEMPERING |
| PRIMARY QUENCHING | SECONDARY QUENCHING |

## FIG. 13

COOL TO EQUAL TO OR LOWER THAN A₁ TRANSFORMATION TEMPERATURE

845°C T₁     800°C T₂

A₁

CARBONI-TRIDING TREATMENT    NORMAL QUENCHING    OIL COOLING

180°C TEMPERING

FIG. 14A

0.05mm

FIG. 14B

0.05mm

FIG. 15A          FIG. 15B

0.05mm

0.05mm

FIG. 16

$P$

$\phi 60$

$\phi 45$

$e_1$  $e_2$

15

FIG. 17A

FIG. 17B

FIG. 18

## INTERNATIONAL SEARCH REPORT

| International application No. |
|---|
| PCT/JP2005/009449 |

| A. CLASSIFICATION OF SUBJECT MATTER |
|---|
| Int.Cl⁷ F16C33/34, 33/66 |

According to International Patent Classification (IPC) or to both national classification and IPC

| B. FIELDS SEARCHED |
|---|

Minimum documentation searched (classification system followed by classification symbols)
Int.Cl⁷ F16C33/30-33/66

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 3-117725 A (NTN Corp.), 20 May, 1991 (20.05.91), Claims (Family: none) | 1-5 |
| Y | JP 1-30008 B2 (NTN Toyo Bearing Co., Ltd.), 15 June, 1989 (15.06.89), Claims (Family: none) | 1-5 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 August, 2005 (09.08.05) | 06 September, 2005 (06.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/009449

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-226919 A (NTN Corp.), 15 August, 2003 (15.08.03), Claim 1 & JP 2003-226918 A & JP 2003-227517 A & JP 2003-227518 A & JP 2004-092913 A & JP 2004-137605 A & JP 2004-138238 A & US 2003/0123769 A1 & DE 10254635 A & FR 2841907 A & CN 1421541 A | 2 |
| Y | JP 6-341441 A (NSK Ltd.), 13 December, 1994 (13.12.94), Tables 1 to 2 & US 6325867 B1 & GB 2278613 A & DE 4419035 A | 4-5 |
| A | Japanese Standards Association, "JIS B 0601: 2001", JIS Handbook Kikai Yoso, first edition, 31 January, 2002 (31.01.02), pages 177 to 190 | 1-5 |
| A | JP 4-282018 A (NTN Corp.), 07 October, 1992 (07.10.92), (Family: none) | 1-5 |
| A | JP 4-266410 A (NTN Corp.), 22 September, 1992 (22.09.92), (Family: none) | 1-5 |
| A | JP 2000-205284 A (Koyo Seiko Co., Ltd.), 25 July, 2000 (25.07.00), (Family: none) | 1-5 |
| A | JP 6-42536 A (NTN Corp.), 15 February, 1994 (15.02.94), & JP 2-168021 A & US 4893387 A & GB 2219359 A & FR 2632030 A & KR 9106195 B | 1-5 |
| A | JP 8-311603 A (NSK Ltd.), 26 November, 1996 (26.11.96), & JP 2004-205047 A & US 5672014 A & GB 2294058 A & GB 2323097 A & GB 9904780 A & GB 2231527 A & KR 216877 B | 1-5 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2168021 A
- JP 6042536 A
- JP 2001183124 A